# FASCICULE DE BREVET EUROPEEN

(11) **EP 0 702 807 B1**
(45) Date de publication et mention de la délivrance du brevet: **28.08.2002**
(21) Numéro de dépôt: 95916719.8
(22) Date de dépôt: 06.04.1995
(51) Int. Cl.: G05B 19/042

(54) **SYSTEME ET DISPOSITIF DE PRE-AUTOMATISATION DES INSTALLATIONS D'UN BATIMENT**
SYSTEM UND VORRICHTUNG ZUR VORAUTOMATISIERUNG DER SCHALTANLAGEN EINES GEBÄUDES
BUILDING FACILITY PRE-AUTOMATION SYSTEM AND DEVICE

(30) Priorité: 08.04.1994 FR 9404157
(43) Date de publication de la demande: 27.03.1996
(73) Titulaire: Robot Consult, 92183 Antony Cédex (FR)
(72) Inventeur: BESNARD, Philippe, F-45210 Griselles (FR)
(74) Mandataire: Hafner, Dieter, Dr.rer.nat., Dipl.-Phys.
(86) Numéro de dépôt international: FR9500442
(87) Numéro de publication internationale: WO95027929

(56) Documents cités:
- EP-A- 0 329 486
- WO-A-87/02795
- WO-A-92/04813
- DE-A- 4 223 193
- GB-A- 2 014 367
- US-A- 4 275 455
- US-A- 4 567 557
- PATENT ABSTRACTS OF JAPAN vol. 14 no. 259 (E-0937) ,5 Mai 1990 & JP,A,02 078341 (SECOM CO. LTD.) 19 Mars 1990,

## Description

L'invention concerne, d'une manière générale, l'automatisation des bâtiments et, plus particulièrement, un système qui permet de pré-automatiser les bâtiments industriels, tertiaires ou autres en vue d'installer par la suite divers équipements et installations.

Il est connu d'équiper les bâtiments industriels, tertiaires ou autres de systèmes de pré-câblage qui permettent d'installer ultérieurement des équipements informatiques et téléphoniques. Ces systèmes de pré-câblage sont composés d'éléments passifs tels que câbles, prises, répartiteurs, borniers, fermes de pré-câblage, supports...

De plus en plus, les bâtiments industriels, tertiaires ou autres comportent des équipements et installations pour assurer leur gestion technique et administrative dans les domaines de la climatisation, de la sécurité, du contrôle d'accès, de la gestion des horaires et des visiteurs. Ces équipements et installations comprennent des capteurs qui fournissent, dans chaque domaine cité, des informations à un automate dédié qui élabore des signaux de commande d'actionneurs du même domaine situés à différents emplacements du bâtiment. En outre, il est prévu pour chaque équipement ou installation une unité de supervision qui centralise les informations pour leur surveillance, cette unité pouvant être commune à plusieurs installations.

Le brevet US-A-4 567 557 décrit un système permettant de superviser les capteurs et les actionneurs dans un bâtiment comprenant un système de surveillance permettant de recueillir les informations au niveau central à partir des capteurs et de controler les actionneurs et comprenant également des appareils d'interconnexion qui se connectent aux actionneurs et aux capteurs par un bornier relié via des dispositifs d'entrée/sortie à un microprocesseur.

Bien entendu, chacun des équipements et installations peut être pré-câblé d'une manière analogue à celle des équipements informatiques et téléphoniques mais il s'agit, pour chaque équipement, d'un réseau pré-câblé différent qui ne comporte que des éléments passifs tels que des câbles et des borniers.

L'un des buts de la présente invention est donc de réaliser un système de pré-automatisation d'un bâtiment industriel, tertiaire ou autre qui permet de superviser en tout ou partie tous les capteurs et actionneurs d'au moins un domaine de gestion situé dans une certaine zone du bâtiment.

Un autre but de la présente invention est de réaliser un système de pré-automatisation d'un bâtiment industriel, tertiaire ou autre comprenant plusieurs appareils d'interconnexion répartis dans le bâtiment qui sont connectés entre eux et à au moins une unité de supervision par un réseau de pré-câblage.

L'invention a pour objet un système permettant de superviser des capteurs et des actionneurs tel que défini dans la revendication 1.

D'autres objets, caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'un système de pré-automatisation des installations d'un bâtiment industriel, tertiaire ou autre, selon l'invention;
- les figures 2 et 3 sont des schémas fonctionnels d'un appareil d'interconnexion selon la présente invention;
- la fiqure 4 est une vue schématique de câblages en étoile et en bus d'un appareil d'interconnexion, et
- la figure 5 est une vue d'un appareil d'interconnexion selon l'invention tel qu'il est monté sur un support de pré-câblage.

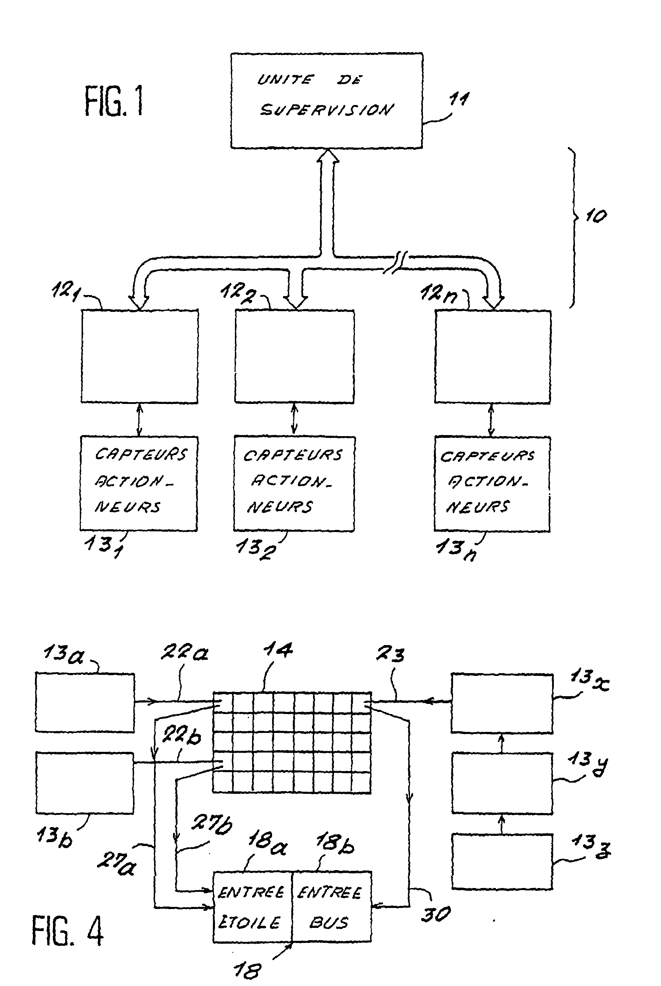

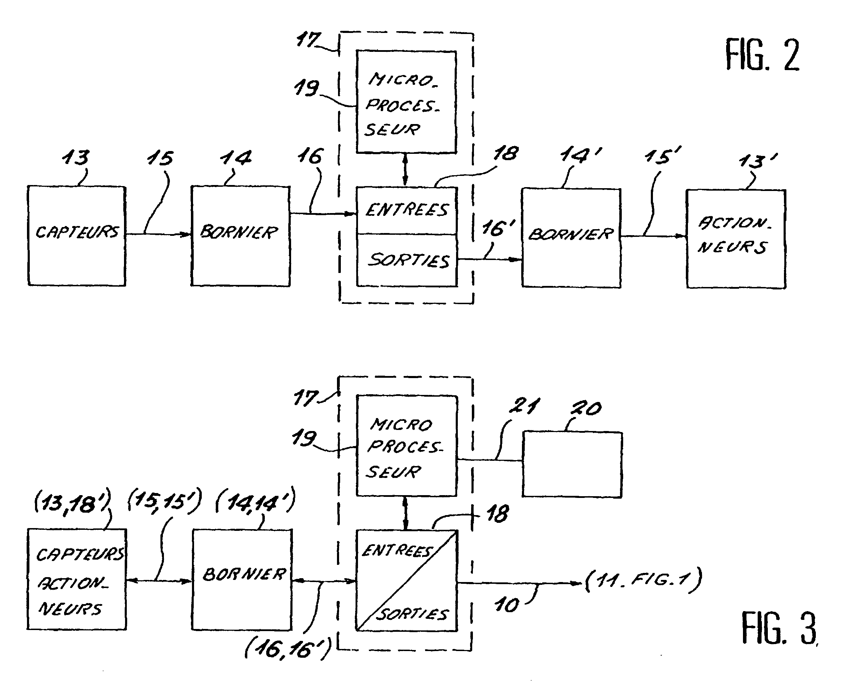

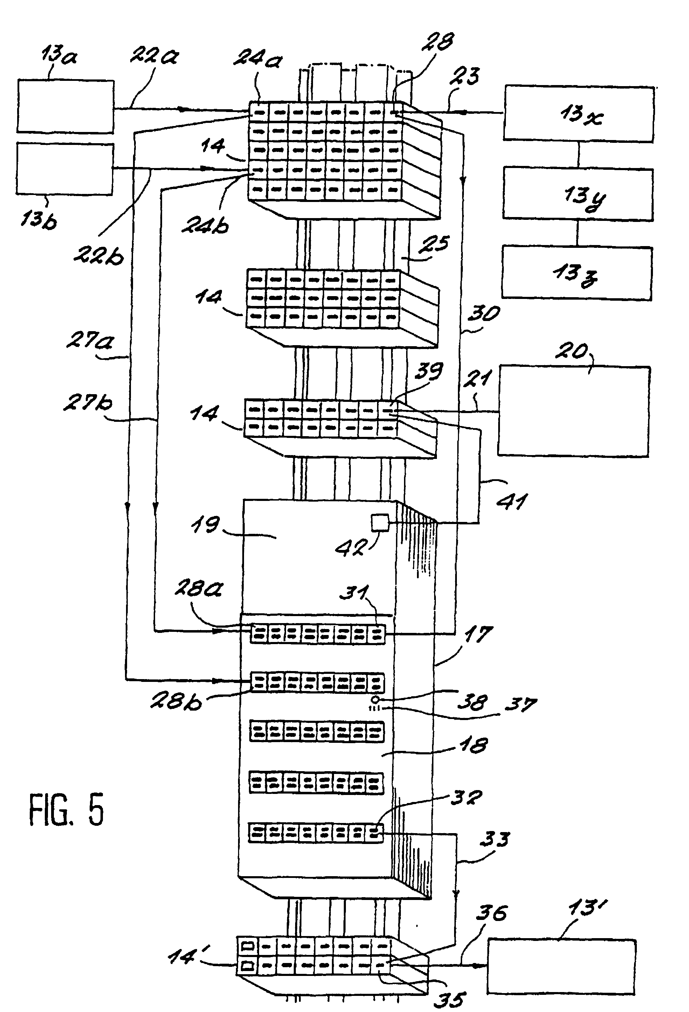

Sur la figure 1, un système de pré-automatisation selon l'invention pour les installations d'un bâtiment industriel, tertiaire ou autre comprend un réseau de câbles 10 qui est prévu pour connecter une unité de supervision 11 à des appareils d'interconnexion 12₁, 12₂...12ₙ au nombre de n qui sont réalisés selon la présente invention. Chaque appareil d'interconnexion 12₁ à 12ₙ est connecté respectivement à des capteurs et des actionneurs référencés 13₁ à 13ₙ. Chaque appareil d'interconnexion 12 comprend au moins (figures 2 et 3) un bornier 14, 14' dont les bornes sont connectées d'une part comme indiqué ci-dessus, par des conducteurs 15, 15' à des capteurs 13 et des actionneurs 13' et, d'autre part, par des conducteurs 16, 16' à un automate 17. L'automate 17 comprend un circuit d'entrées/sorties 18 qui est connecté, d'une part, aux bornes 14, 14' et, d'autre part, à une unité microprogrammée 19 tel qu'un microprocesseur.

Le circuit d'entrées/sorties 18 est également connecté à l'unité de supervision 11 (figure 1) par le réseau de câbles 10. Par ailleurs, le microprocesseur 19 peut être connecté à un ordinateur portable 20 par un câble 21.

Le circuit d'entrées/sorties 18 est prévu pour être connecté, par l'intermédiaire du bornier 14, à des capteurs 13ₐ, 13_{b} (figure 4) par des conducteurs 22ₐ, 27ₐ et 22_{b}, 27_{b} en étoile et à des capteurs 13ₓ, 13_{y} et 13_{z} en série par un bus 23, 30.

Le microprocesseur 19 est microprogrammé pour réaliser un certain nombre de fonctions telles que :
- l'acquisition d'informations en provenance des capteurs 13,
- la mémorisation des informations en provenance des capteurs 13 avec leur date et leur heure d'acquisition,
- la gestion des communications avec l'unité de supervision 11,
- le contrôle d'accès, la gestion des horaires et la régulation, en local, sans l'intervention de l'unité de supervision 11, et
- toutes autres fonctions qui peuvent être nécessaires pour une Gestion Technique du Bâtiment ou une Gestion Administrative Centralisée.

La microprogrammation du microprocesseur 19 peut être réalisée soit à partir de l'unité de supervision 11, soit à partir de l'ordinateur portable 20.

Le microprocesseur 19 comprend de manière connue une unité centrale, une mémoire vive et une mémoire morte qui contient le programme de traitement des fonctions définies ci-dessus.

Les différents éléments d'un appareil d'interconnexion selon l'invention sont montés sur une ferme de pré-câblage 25 dans laquelle sont disposés les câbles du réseau de pré-câblage comme le montre la figure 5.

Les capteurs 13ₐ et 13_{b} sont connectés respectivement par des câbles 22ₐ, 22_{b} à des bornes 24ₐ, 24_{b} du bornier 14 par sa face arrière. Ces bornes 24ₐ, 24_{b} sont connectées, par la face avant du bornier, respectivement par des câbles 27ₐ, 27_{b} à deux entrées 28ₐ, 28_{b} du circuit d'entrées/sorties 18.

Les capteurs 13ₓ, 13_{y} et 13_{z} sont connectés par un bus 23 à une borne 28, par sa face arrière du bornier; cette dernière est connectée par la face avant du bornier à une borne d'entrée 31 du circuit d'entrées/sorties 18 par un câble 30.

De manière similaire, un actionneur 13' reçoit un signal électrique par l'intermédiaire d'une borne de sortie 32 du circuit d'entrées/sorties 18, d'un premier, câble 33 qui le connecte à une borne 35 du bornier 14' par sa face avant, et d'un deuxième câble 36 entre la face arrière de la borne 35 et l'actionneur 13'.

Les câbles 22ₐ, 22_{b}, 23 et 36 font partie du réseau de pré-câblage et sont connectés au bornier 14, 14' par la face arrière tandis que les câbles 27ₐ, 27_{b}, 30 et 33 sont mis en place à la demande et sont connectés au bornier par la face avant.

Les bornes d'entrées/sorties du circuit d'entrées/sorties 18 peuvent être de tout type connu et présenter chacune un repérage codé 37 et un voyant de signalisation 38.

L'ordinateur portable 20 est connect au microprocesseur 19 par l'intermédiaire du câble 21, une borne d'entrée 39 du bornier 14, d'une borne de sortie 40 et d'un câble 41 connecté à une prise spéciale 42 du microprocesseur 19. Dans une variante le câble 21 peut être connecté directement à la prise spéciale 42.

A titre indicatif, chaque appareil d'interconnexion est prévu pour être connecté à vingt-cinq capteurs et/ou actionneurs et il est donc nécessaire d'installer une quarantaine de dispositifs pour un système à mille points de mesure.

## Revendications

1. Un système permettant de superviser des capteurs (13) et des actionneurs (13) dans un bâtiment, composé:
d'un système de supervision (11) permettant de recueillir les informations au niveau central à partir desdits capteurs (13) et de contrôler lesdits actionneurs (13')
de divers appareils d'interconnexion (12₁, 12₂, ...12ₙ) qui se connectent aux actionneurs (13') et aux capteurs précités, comprenant:
a) divers borniers (14, 14') reliées aux capteurs précités (13) et aux actionneurs (13') par des conducteurs d'une première série de câbles (15, 15');
b) un microprocesseur (19) présentant diverses connexions entrée/sortie, une partie d'entre elles étant reliée aux borniers précités (14, 14') par des conducteurs d'une seconde série de câbles (16, 16') afin de transmettre des signaux permettant de contrôler lesdits actionneurs (13') et de recevoir des signaux à partir des capteurs précités (13); ainsi qu'un système de précâblage (10) se trouvant dans ledit bâtiment, reliant le système de supervision précité (11) à une partie restante desdites connexions entrée/sortie, dans lequel
c) lesdits signaux peuvent être transférés vers et à partir des appareils d'interconnexion et du système de supervision précité (11) et la première série de câbles précitée (15) correspond à des câbles précâblés dans ledit bâtiment et
d) dans lequel ladite partie des connexions entrée/sortie précitées comprend une connexion étoile avec certains capteurs précités (13) et une connexion bus avec d'autres capteurs précités (13).

2. Le système conformément à la revendication 1, dans lequel ledit microprocesseur (19) comprend une douille pour un branchement à un ordinateur portable qui programme ledit microprocesseur.

3. Le système conformément à la revendication 2, dans lequel lesdits appareils d'interconnexion sont soutenus sur ledit système de précâblage (10).

## Claims

1. System for monitoring sensors (13) and actuators (13') in a building, comprising:
a monitoring system (11) for acquiring data centrally from said sensors (13) and for controlling said actuators (13'),
various interconnecting apparatuses (12₁, 12₂,...12ₙ) which are connected to the above-mentioned actuators (13') and sensors, comprising:
a) various terminal blocks (14, 14') connected to the above-mentioned sensors (13) and actuators (13') by conductors of a first series of cables (15, 15');
b) a microprocessor (19) having various input/output connections, of which a part is connected to the above-mentioned terminal blocks (14, 14') by conductors of a second series of cables (16, 16') to transmit signals for controlling said actuators (13') and for receiving signals from the above-mentioned sensors (13); and a pre-cabling system (10) being located in said building, connecting the above-mentioned monitoring system (11) to a remaining part of said input/output connections, in which
c) said signals can be transferred to and from interconnection apparatuses and from the above-mentioned monitoring system (11) and the first above-mentioned series of cables (15) corresponds to pre-cabled cables in said building and
d) in which said part of the above-mentioned input/output connections comprises a star connection with certain above-mentioned sensors (13) and a bus connection with other above-mentioned sensors (13).

2. The system according to claim 1, in which said microprocessor (19) comprises a socket for a connection to a portable computer which programmes said microprocessor.

3. The system according to claim 2, in which said interconnection apparatuses are supported on said pre-cabling system (10).

## Patentansprüche

1. Ein System, das die Überwachung von Sensoren (13) und Schaltern (13) in einem Gebäude ermöglicht, bestehend aus:
- einem Überwachungssystem (11), das die Erfassung von Informationen auf zentraler Ebene ausgehend von den genannten Sensoren (13) ermöglicht sowie die Steuerung der genannten Schalter (13').
- verschiedenen Geräten zur Zusammenschaltung (12₁, 12₂, ... 12ₙ), die an die zuvor genannten Schalter (13') und Sensoren angeschlossen werden, die folgendes umfassen:
a) verschiedene Klemmkästen (14, 14') die mit den zuvor genannten Sensoren (13) und Schaltern (13') durch Leiter einer ersten Kabelserie (15, 15') verbunden sind;
b) einem Mikroprozessor (19), der verschiedene Anschlüsse (Ein- und Ausgänge) aufweist. Ein Teil derselbe ist mit den zuvor aufgeführten Klemmkästen (14, 14') durch eine zweite Kabelserie (16, 16') verbunden, um die Signale weiterzuleiten, die eine Steuerung der genannten Schalter (13') ermöglichen sowie die Signale ausgehend von den aufgeführten Sensoren (13) zu empfangen. Außerdem gibt es ein Vorverkabelungssystem (10), das sich in dem Gebäude befindet und welches das Überwachungssystem (11) mit dem verbleibenden Teil der genannten Anschlüsse (Ein- und Ausgänge) verbindet, indem
c) die genannten Signale in Richtung auf und von den Geräten zur Zusammenschaltung und des Überwachungssystems (11) übertragen werden können und die erste Kabelserie (15) entspricht den vorverkabelten Kabeln in dem genannten Gebäude und, indem
d) der genannte Teil der Anschlüsse (Ein- und Ausgänge) eine Sternschaltung mit bestimmten zuvor aufgeführten Sensoren (13) sowie eine Busschaltung mit den anderen Sensoren umfasst.

2. Das System in Übereinstimmung mit Anspruch Nr. 1 bei dem der genannte Mikroprozessor (19) eine Buchse für eine Abzweigung an einen tragbaren Rechner beinhaltet, der den genannten Mikroprozessor programmiert.

3. Das System in Übereinstimmung mit Anspruch Nr. 2 bei dem die genannten Geräte zur Zusammenschaltung durch das aufgeführte Vorverkabelungssystem (10) unterstützt werden.
